# EUROPÄISCHE PATENTSCHRIFT

(11) **EP 3 992 621 B1**
(45) Veröffentlichungstag und Bekanntmachung des Hinweises auf die Patenterteilung: **11.09.2024**
(21) Anmeldenummer: 21204167.7
(22) Anmeldetag: 22.10.2021
(51) Int. Cl.: G01N 25/48

(54) **MESSGERÄT MIT ELEKTROTHERMISCHEM WANDLER ZUM EINSTELLEN EINES THERMISCHEN WIDERSTANDES, UND BETRIEBSVERFAHREN**
MEASURING DEVICE WITH ELECTROTHERMAL TRANSDUCER FOR ADJUSTING THERMAL RESISTANCE, AND METHOD OF OPERATION
APPAREIL DE MESURE POURVU DE CONVERTISSEUR ÉLECTROTHERMIQUE PERMETTANT DE RÉGLER UNE RÉSISTANCE THERMIQUE ET PROCÉDÉ DE FONCTIONNEMENT

(30) Priorität: 30.10.2020 AT 509352020
(43) Veröffentlichungstag der Anmeldung: 04.05.2022
(73) Patentinhaber: Anton Paar GmbH, 8054 Graz (AT)
(72) Erfinder: Thaler, Philipp, 8010 Graz (AT)
(74) Vertreter: Dilg, Haeusler, Schindelmann Patentanwaltsgesellschaft mbH

(56) Entgegenhaltungen:
- WO-A1-2011/060768
- WO-A1-2012/103601
- JP-A- 2018 200 207
- US-A1- 2011 164 652

## Beschreibung

Die Erfindung betrifft ein Messgerät zur thermischen Analyse, insbesondere für eine (thermische) Differenz Messung. Weiterhin betrifft die Erfindung ein Verfahren zum Betreiben eines Messgeräts.

Die Erfindung kann somit auf dem technischen Gebiet der Messgeräte zur thermischen Analyse liegen. Insbesondere kann die Erfindung auf dem technischen Gebiet der Differenz-Abtast Kalorimeter oder der Messgeräte zur thermischen Differenzanalyse liegen.

Messgeräte zur thermischen Analyse sind prinzipiell bekannt und umfassen z.B. Differenz-Abtast Kalorimeter (differential scanning calorimeter, DSC) und thermische Differenzanalysen (differential thermal analysis, DTA). Ein solches Messgerät weist generell einen Ofen auf, in dem sich zwei Probenbehälter befinden, wobei ein Probenbehälter mit einer Probe versehen wird und der andere mit einer Referenz (bei der Referenz kann es sich auch einfach um einen leeren Probenbehälter handeln). Dieser Aufbau ermöglicht die Messung verschiedener physikalischer Eigenschaften, welche mit einer Temperaturänderung in Bezug stehen. Kommt es beispielsweise zu Phasenübergängen bzw. Phasenumwandlungen in der Probe, so bildet sich (bei gleicher zugeführter Wärmemenge mittels des Ofens) eine Temperaturdifferenz zwischen dem Probenbehälter mit der Probe und dem Probenbehälter mit der Referenz aus. Der Temperaturunterschied bzw. der Wärmefluss zwischen Probe und Referenz wird dann mittels Sensoren gemessen, wodurch Rückschlüsse auf die Art des Phasenübergangs bzw. der Phasenumwandlung ermöglicht sind.

Im Allgemeinen weist ein solches Messgerät ein Heizsystem mit einer elektrischen Heizung auf, welche einen Ofen entsprechend einem Zeit-Temperatur Profil erwärmt. Bei thermischen Messungen sind allerdings nicht nur Aufheizkurven (ansteigende Temperaturprofile) sondern auch Abkühlkurven (abfallende Temperaturprofile) von Bedeutung. Ein reines Ausschalten der elektrischen Heizung allein reicht für viele Messanwendungen nicht aus, um eine benötigte schnelle Abkühlrate zu erreichen. Aus diesem Grund wird eine aktive Kühlung mittels eines Kühlsystems benötigt.

Beim Aufheizen durch das Heizsystem soll einerseits sichergestellt sein, dass nicht zu viel Wärme vom Ofen an das Kühlsystem abgegeben wird, da ansonsten die Aufheizraten nicht eingehalten werden können. Andererseits soll aber die Wärme bei jedem Abkühlvorgang hinreichend rasch in Richtung Kühlsystem abgeführt werden können. Um dieser Problematik entgegenzuwirken ist es im Stand der Technik bekannt, als Verbindungsstück zwischen Heizsystem und Kühlsystem einen sogenannten thermischen Widerstand (thermal resistor) anzuordnen.

Allerdings ist durch die generell kompakte Bauweise eines Kalorimeters die elektrische Heizung des Heizsystems in ihrer Leistung limitiert. Ist also der thermische Widerstand zu gering, heizt das Heizsystem zu langsam auf und/oder kann seine Zieltemperatur nicht mehr erreichen. Ist der thermische Widerstand aber zu hoch, kann die Wärme bei einem Abkühlvorgang nicht schnell genug in Richtung Kühlsystem abgeführt werden.

In anderen Worten besteht der Nachteil, dass der thermische Widerstand in der Aufheizphase zu viel Wärme von dem Heizsystem abführt und in der Abkühlphase zu wenig Wärme von dem Heizsystem abführt. Bei dem thermischen Widerstand handelt es sich aber um ein fest verbautes Element, welches bevorzugt aus einem besonders wärmeleitfähigen Metall besteht.

WO2011/060768 offenbart ein Gerät zur thermischen Analyse einer Probe, mit einer Probenaufnahme in einer heizbaren Kammer, einer Kühlvorrichtung, und einem zwischen der Kammer und der Kühlvorrichtung angeordneten elektrothermischen Wandler.

Es ist eine Aufgabe der vorliegenden Erfindung ein Messgerät zur thermischen Analyse bereitzustellen, welches einen effizienten und dynamischen Wärmefluss aufweist (insbesondere wobei ein thermischer Widerstand während einer Aufheizphase möglichst hoch und in einer Abkühlphase möglichst niedrig ist).

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Der Begriff "Messgerät" bezeichnet eine Vorrichtung, welche eingerichtet ist, physikalische Eigenschaften einer Probe zu messen. Erfindungsgemäß handelt es sich bei den physikalischen Eigenschaften um thermische Eigenschaften bzw. Eigenschaften, welche bei einer Veränderung der Umgebungstemperatur beobachtbar sind/werden. Beispiele solcher Eigenschaften können umfassen: Schmelz- und Glasübergangstemperaturen (insbesondere für Kunststoffe), kinetische Betrachtungen chemischer Reaktionen, spezifische Wärmekapazitäten, Bestimmung der Reinheit von Substanzen (aufgrund der durch Verunreinigungen auftretenden Schmelzpunktänderung).

Der Begriff "Probenaufnahme" bezeichnet eine Vorrichtung an oder in einem Messgerät, welche geeignet ist eine zu messende Probe aufzunehmen. Erfindungsgemäß ist das Messgerät für eine Differenz-Messung konfiguriert, und die Probenaufnahme weist zwei Probenbehälter auf, einen für die Probe und einen weiteren für die Referenz (dieser kann auch leer sein). Die Probenaufnahme kann weiterhin bekannte Sensorik aufweisen, um z.B. Temperaturveränderungen in/an den Probenbehältern während einer Messung zu erfassen. Aufgenommene Daten können an eine Steuereinheit und/oder eine Auswerteeinheit weitergeleitet werden.

Der Begriff "Heizvorrichtung" bezeichnet eine Vorrichtung, welche geeignet ist, eine Temperaturerhöhung (bzw. ein Aufheizen) an eine Probenaufnahme bzw. Messkammer bereitzustellen. Die Heizvorrichtung kann hierfür ein Heizelement (oder eine Mehrzahl von Heizelementen aufweisen). Beispielsweise kann die Heizvorrichtung ein elektrisches Heizelement umfassen, welches besonders dafür geeignet ist, bei elektrischer Energie-Zufuhr Wärme an die Umgebung abzugeben. Ein Heizelement kann z.B. einen Heizdraht, ein Heizkabel, eine Heizfolie, oder eine Heizfläche umfassen. Auch kann ein Heizelement z.B. durch eine Kupferbahn realisiert werden. Die Heizvorrichtung kann derart gesteuert (bzw. geregelt) werden, dass ein zeitabhängiger Temperaturverlauf (bzw. ein Temperaturprofil) an die Probenaufnahme (wie oben beschrieben) bereitgestellt wird. Die Heizvorrichtung kann direkt mit der Probenaufnahme gekoppelt sein, oder auch räumlich separat von dieser angeordnet sein. Erfindungsgemäß ist die Heizvorrichtung unterhalb der Probenaufnahme angeordnet oder kreisförmig um die Probenaufnahme herum lokalisiert.

Der Begriff "Kühlvorrichtung" bezeichnet eine Vorrichtung, welche geeignet ist, eine Temperaturreduktion (bzw. ein Abkühlen) in der Umgebung einer Probenaufnahme bereitzustellen. In einem einfachen Ausführungsbeispiel kann die Kühlvorrichtung ein Wärmerohr (heat pipe) oder eine Wärmesenke (heat sink) sein, welche Wärme auf bekannte Weise abtransportiert bzw. ableitet. In einem weiteren Ausführungsbeispiel kann die Kühlvorrichtung eine Kavität aufweisen, in welcher ein Kühlmedium aufbewahrt wird bzw. zirkuliert. Bei dem Kühlmedium kann es sich beispielsweise um Kaltluft, flüssigen Stickstoff, Helium, oder andere bekannte Kühlmedien handeln. Ferner kann auch ein bekannter Kryostat verwendet werden. Weiterhin kann die Kühlvorrichtung ein Peltier-Element aufweisen, welches in einem Kühlmodus verwendet wird. Ein solches Peltier-Element innerhalb der Kühlvorrichtung, betrieben (ausschließlich) im Kühl-Modus, sollte keinesfalls mit dem unten beschriebenen elektrothermischen Wandler verwechselt werden. Die Kühlvorrichtung kann derart gesteuert (bzw. geregelt) werden, dass ein zeitabhängiger Temperaturverlauf (bzw. ein Temperaturprofil) an eine Probenaufnahme (wie oben beschrieben) bereitgestellt wird. Vorzugsweise kann die Kühlvorrichtung zumindest teilweise um die Heizvorrichtung und/oder die Probenaufnahme herum angeordnet sein. Insbesondere kann die Kühlvorrichtung räumlich entfernt von der Probenaufnahme angeordnet sein. Erfindungsgemäß ist die Heizvorrichtung räumlich näher an der Probenaufnahme als die Kühlvorrichtung.

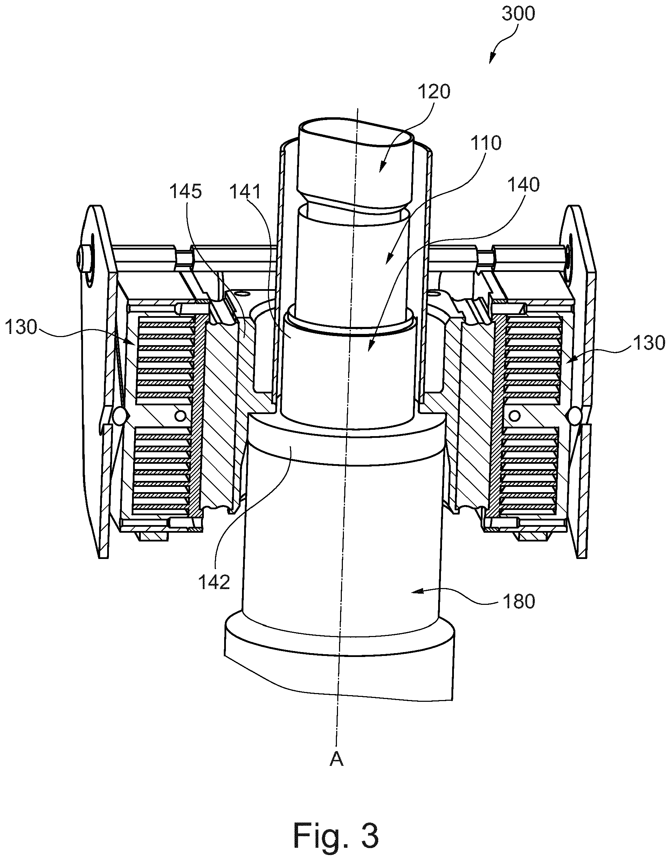

Der Begriff "Wärmetransportelement" bezeichnet ein Bauteil, welches eine spezifische Wärmeleitfähigkeit bzw. einen spezifischen thermischen Widerstand aufweist und welches zu dem Zwecke verbaut werden kann, dass ein Wärmetransport bzw. Wärmefluss bereitgestellt ist. Beispielsweise kann ein Wärmetransportelement zwischen einer Heizvorrichtung und einer Kühlvorrichtung vorgesehen werden, so dass über das Wärmetransportelement ein Wärmefluss zwischen beiden Vorrichtungen stattfindet. Prinzipiell kann das Wärmetransportelement in jeglicher Form und Größe bereitgestellt werden. Ein mögliches Ausführungsbeispiel ist z.B. in Figur 3 unten beschrieben. Bevorzugt weist das Wärmetransportelement ein besonders wärmeleitfähiges Material auf. Dies kann insbesondere ein Metall oder eine Metalllegierung sein. Beispielsweise können Nickel oder Kupfer (auch als Legierung) verwendet werden. Prinzipiell sind auch weitere besonders wärmeleitfähige Materialien denkbar wie z.B. eine Funktionskeramik oder Diamant-ähnlicher Kohlenstoff.

Der Begriff "elektrothermischer Wandler" bezeichnet ein Element, welches bei Vorliegen eines Stromdurchfluss eine Temperaturdifferenz und umgekehrt bei Vorliegen einer Temperaturdifferenz einen Stromfluss bereitstellt. Ein elektrothermischer Wandler kann somit in einem Kühl-Modus betrieben werden und (bei Stromrichtungsumkehr) in einem Heiz-Modus verwendet werden. Somit kann durch Ansteuerung mittels Stromzufuhr (ein Steuern oder Regeln) ein bestimmter erwünschter Betriebsmodus vorgesehen werden. In Kopplung mit einem Wärmetransportelement (wie oben beschrieben), kann der thermische Widerstand dieses elektrothermischen Wandlers gezielt und dynamisch eingestellt werden. Hierfür sollte das elektrothermische Element räumlich nahe (insbesondere in direktem Kontakt) an dem Wärmetransportelement positioniert werden. Besonders bevorzugt ist das elektrothermische Element derart zwischen Wärmetransportelement und Kühlvorrichtung angeordnet, dass ein Kontakt zwischen Kühlvorrichtung und Wärmetransportelement durch das elektrothermische Element verunmöglicht ist. Es hat sich gezeigt, dass ein Betreiben eines elektrothermischen Wandlers in einem Heiz-Modus bzw. ein Ausschalten des elektrothermischen Wandlers den thermischen Widerstand eines Wärmetransport-Pfades zwischen der Heizvorrichtung und der Kühlvorrichtung gezielt erhöhen kann, während ein Betreiben eines elektrothermischen Wandlers in einem Kühl-Modus den thermischen Widerstand des Wärmetransport-Pfades gezielt reduzieren kann.

Gemäß einem Ausführungsbeispiel bleibt der thermische Widerstand (Rₜₕ =I/λ*A) des Wärmetransportelements prinzipiell gleich bzw. verändert sich nicht. Jedoch kann der thermische Widerstand des elektrothermischen Wandlers und damit der thermische Widerstand eines Wärmetransport-Pfades durch das Wärmetransportelement und den elektrothermischen Wandler beeinflusst/eingestellt werden. Der Begriff "Wärmetransport-Pfad" kann in diesem Dokument insbesondere Bauelemente bezeichnen, welche zwischen der Heizvorrichtung und Kühlvorrichtung angeordnet sind (z.B. Wärmetransportelement und elektrothermischer Wandler). Der thermische Widerstand des Wärmetransportelements kann z.B. zwischen 3 K/W und 9 K/W liegen. Der thermische Widerstand des elektrothermischen Wandlers kann z.B. zwischen - 90 K/W und + 50 K/W liegen.

Gemäß einem Ausführungsbeispiel kann durch Beeinflussung einer Temperaturdifferenz, insbesondere zwischen Heizvorrichtung und Kühlvorrichtung, der Wärmefluss durch das Wärmetransportelement wie folgt erhöht oder reduziert werden:
Wärmefluss/Wärmestrom (Watt, Wärmeleistung): Q = ΔT/Rₜₕ.
Somit stellt ein Betreiben des elektrothermischen Wandlers den Wärmefluss durch das Wärmetransportelement ein.

Gemäß einem Ausführungsbeispiel kann ein "Einstellen" wie folgt durchgeführt werden: der thermische Widerstand des Wärmetransport-Pfades (bzw. der Wärmefluss durch das Wärmetransportelement) kann erhöht oder kann erniedrigt werden bzw. es kann ein gewünschter Wertebereich des thermischen Widerstands des Wärmetransport-Pfades eingestellt werden.

Insbesondere kann ein "Einstellen" des thermischen Widerstands des Wärmetransport-Pfades aus Wärmetransportelement und elektrothermischem Wandler (bzw. des Wärmeflusses durch das Wärmetransportelements) dadurch erfolgen, dass der elektrothermische Wandler entgegen oder in Richtung des Temperaturgefälles (zwischen Heizvorrichtung und Kühlvorrichtung) über den Wärmetransport-Pfad Wärme pumpt.

Insbesondere kann der thermische Widerstand des Wärmetransport-Pfades (bzw. der Wärmefluss durch das Wärmetransportelement) durch Variation der Wärmepumpleistung des elektrothermischen Wandlers auf einen gewünschten Wert eingestellt werden. Beispielsweise kann als elektrothermischer Wandler ein Peltier Element auf BiTe Basis zum Einsatz kommen, und hierbei sowohl Betriebsstrom, als auch Polarität der Betriebsspannung frei gewählt werden, um die erwähnten Effekte zu erzielen.

Gemäß einem exemplarischen Ausführungsbeispiel basiert die Erfindung auf der Idee, dass ein Messgerät zur thermischen Analyse bereitgestellt werden kann, welches einen effizienten und dynamischen Wärmefluss aufweist, wenn ein elektrothermischer Wandler derart zwischen einem Wärmetransportelement und einer Kühlvorrichtung vorgesehen ist, dass ein gezieltes Betreiben des elektrothermischen Wandlers den Wärmefluss durch das Wärmetransportelement (bzw. den thermischen Widerstand des Wärmetransport-Pfades durch das Wärmetransportelement und den elektrothermischen Wandler) dynamisch einstellt. Auf diese Weise ist ein thermischer Widerstand innerhalb des Messgeräts bereitgestellt, welcher während einer Aufheizphase möglichst hoch und in einer Abkühlphase möglichst niedrig sein kann.

Konventionell wird bezüglich des Wärmeflusses in einem Messgerät wie einem Kalorimeter ein Kompromiss zwischen Aufheizen und Abkühlen vorgesehen, indem ein Wärmetransportbauteil vorgesehen wird, dessen thermischer Widerstand einen Mittelwert (bzw. Kompromiss-Wert) darstellt, und der unveränderlich ist (es handelt sich bei dem Wärmetransportbauteil gewöhnlich um ein statisches Bauteil aus Metall oder Keramik).

Der Erfinder hat nun aber überraschend erkannt, dass ein gezielt einstellbarer (und somit dynamische betreibbarer) Wärmefluss (bzw. thermischer Widerstand) auf effiziente und doch einfache Weise realisiert werden kann, wenn ein elektrothermischer Wandler (z.B. ein Peltier-Element) zwischen Wärmetransportelement und Kühlvorrichtung eingebaut wird.

Das erfindungsgemäße Messgerät bietet wesentlich schnellere Aufheiz- und Abkühlraten als konventionelle Messgeräte und damit eine besonders effiziente Betriebweise. Der beschriebene Aufbau kann zudem auf einfache und flexible Weise in bestehende Systeme integriert werden.

Es mag als bekannt angesehen werden, dass Peltier-Elemente in Messgeräten als zusätzliche Heizvorrichtung oder zusätzliche Kühlvorrichtung verwendet werden. Ein grundlegender Gedanke der Erfindung ist allerdings, dass der elektrothermische Wandler eben nicht als zusätzliche Heizung oder zusätzliche Kühlung verwendet wird, sondern einzig dem Zweck dient, den thermischen Widerstand in dem Wärmefluss zwischen Heizvorrichtung und Kühlvorrichtung gezielt und dynamisch an die erforderlichen Bedingungen anzupassen. Damit erfüllt der elektrothermische Wandler in dem beanspruchten Messgerät eine vollkommen andere technische Aufgabe als im Stand der Technik. Entsprechend ist der elektrothermische Wandler in dem beanspruchten Messgerät auch gänzlich anders positioniert, nämlich direkt zwischen Kühlvorrichtung und Wärmetransportelement.

Im Weiteren werden zusätzliche exemplarische Ausführungsbeispiele der Vorrichtung und des Verfahrens beschrieben.

Erfindungsgemäß kann der elektrothermische Wandler sowohl in einem Heiz-Modus als auch in einem Kühl-Modus betrieben werden. Dadurch ergibt sich der besondere Vorteil, dass auf einfache Weise eine hocheffiziente dynamische Einstellbarkeit eines thermischen Widerstandes ermöglicht ist. Ein elektrothermischer Wandler mit der beschriebenen Funktionsweise lässt sich auf verschiedene Weisen realisieren.

Insbesondere kann der elektrothermische Wandler besonders vorteilhaft (effizient und direkt) mittels eines bekannten Peltier-Element implementiert werden. Prinzipiell kann jede Serien- und/oder Parallelschaltung von Peltier-Elementen zur Realisierung des elektrothermischen Wandlers verwendet werden. In einer Ausführungsform sind Peltier-Elemente nicht symmetrisch aufgebaut (sie besitzen eine gekennzeichnete Kaltseite), wobei zur Veränderung des thermischen Widerstandes die Kaltseite sowohl der Seite des Wärmetransportelements als auch der Seite der Kühlvorrichtung zugewandt sein kann. Entsprechend können Peltier-Elemente eine Warmseite aufweisen, wobei zur Veränderung des thermischen Widerstandes die Warmseite sowohl der Seite des Wärmetransportelements als auch der Seite der Kühlvorrichtung zugewandt sein kann.

Erfindungsgemäß ist der elektrothermische Wandler derart zwischen dem Wärmetransportelement und der Kühlvorrichtung angeordnet, dass ein direkter Kontakt zwischen dem Wärmetransportelement und der Kühlvorrichtung verunmöglicht ist. In anderen Worten verhindert die Positionierung des elektrothermischen Wandlers direkt zwischen Kühlvorrichtung und Wärmetransportelement einen physikalischen Kontakt. Dadurch ergibt sich der Vorteil, dass eine Einstellbarkeit des thermischen Widerstandes (des Wärmetransportelements) unabhängig von einem direkten Einfluss der Kühlvorrichtung, und damit effizienter, möglich ist. Ohne diese physikalische Trennung könnte die von der Kühlvorrichtung bereitgestellte Abkühlung den thermischen Widerstand des Wärmetransportelements unerwünscht beeinflussen. In einem Ausführungsbeispiel kommt es, durch die Trennung der Heizvorrichtung von der Kühlvorrichtung (im heißen Zustand der Probenkammer), durch einen großen thermischen Widerstand, zu wesentlich geringerer Durchwärmung der Kühlvorrichtung als im Fall eines kleinen thermischen Widerstandes. Wird nun bei hoher Temperatur die Heizvorrichtung abgeschaltet und der thermische Widerstand auf einen kleinen Wert eingestellt, so steht sofort die volle Kühlleistung der (nicht durchwärmten) Kühlvorrichtung zur Verfügung.

Erfindungsgemäß weist die Probenaufnahme zwei Probenbehälter auf, und das Messgerät ist konfiguriert eine Differenz-Messung bezüglich der zwei Probenbehälter durchzuführen. Auf diese Weise kann das beschriebene vorteilhafte Messgerät direkt für Industrie-relevante Messungen verwendet werden.

In einem exemplarischen Beispiel werden ein verkapselter Probenbehälter, z.B. ein Tiegel aus Aluminium, mit einer Probe, und ein zweiter Probenbehälter ohne Inhalt (Referenz) einem gleichartigen Temperaturprogramm ausgesetzt. Dabei kommt es infolge der Wärmekapazität der Probe und exothermen oder endothermen Prozessen bzw. Phasenänderungen wie Schmelzen oder Verdampfen zu Temperaturänderungen im Vergleich zum leeren Probenbehälter, denn thermische Energie fließt in den oder aus dem entsprechenden Prozess.

Gemäß einem weiteren Ausführungsbeispiel ist das Messgerät ein Differenz-Abtast Kalorimeter oder ein Differenz-Thermoanalyse Messgerät. Auch in dieser Weise kann das beschriebene vorteilhafte Messgerät direkt für Industrie-relevante Messungen verwendet werden. DSC und DTA sind prinzipiell bekannt (siehe oben), können mittels des beschriebenen Messgeräts aber besonders effizient durchgeführt werden.

Gemäß einem weiteren Ausführungsbeispiel ist die Heizvorrichtung eingerichtet zum Bereitstellen eines zeitabhängigen ansteigenden Temperaturverlaufs. Zusätzlich oder alternativ ist die Kühlvorrichtung eingerichtet zum Bereitstellen eines zeitabhängigen abfallenden Temperaturverlaufs. Heiz- und/oder Kühlvorrichtung dienen somit nicht nur zum Heizen/Kühlen an sich, sondern tun dies gezielt, um ein bestimmtes Temperatur-(Zeit)-Profil an die zu messende Probe bereitzustellen.

Gemäß einem weiteren Ausführungsbeispiel weist die Kühlvorrichtung zumindest eines aus der Gruppe auf, welche besteht aus: einem Wärmerohr, einer Wärmesenke, einem Kryostaten, einem Peltier-Element, einem Wärmetauscher. Dies kann den Vorteil haben, dass bekannte und etablierte Kühlsysteme direkt implementiert werden können. Die Kühlvorrichtung ist insbesondere als geschlossene Einheit ausgebildet, welche sich mittels eines elektrothermischen Wandlers räumlich von weiteren Komponenten des Messgeräts (Wärmetransportelement, Heizvorrichtung) abtrennen lässt.

In einem Ausführungsbeispiel wird die durch das Peltier-Element an dessen Kaltseite abgeführte Wärmeenergie an der Warmseite des Peltier-Elements wieder abgegeben. Vorteilhafterweise (insbesondere in Hinblick auf Effizienz und Schutz des Peltier-Elements) wird die Warmseite des Peltier-Elements gekühlt, z.B. mittels einer direkten Luftkühlung. In einem Ausführungsbeispiel reicht die reine Oberfläche des Peltier-Elements nicht aus, sondern - um die Energie abführen zu können - kann z.B. ein Wärmetauscher eingesetzt werden. Ein Ausführungsbeispiel für einen derartigen Wärmetauscher wäre ein bekannter Lamellen-Kühlkörper.

Erfindungsgemäß ist das Messgerät derart konfiguriert, dass das Betreiben des elektrothermischen Wandlers aufweist: ein Steuern oder ein Regeln des thermischen Widerstands des Wärmetransport-Pfades. Dies hat den Vorteil, dass eine dynamische (insbesondere stufenlose) Anpassung des thermischen Widerstandes umgesetzt werden kann.

Dieses Steuern/Regeln erfolgt automatisch mittels einer Steuereinheit des Messgeräts. Beispielsweise kann ein entsprechendes Computerprogramm hierfür auf einem Datenträger gespeichert sein. In einem speziellen Ausführungsbeispiel kann die Steuereinheit auch eine künstliche Intelligenz (z.B. mittels neuronaler Netzwerke) aufweisen, welche das Steuern/Regeln mittels eines selbstlernenden Algorithmus weiter verbessert.

Die Ansteuerung des elektrothermischen Wandlers, insbesondere Peltier-Elements, kann auf bekannte Weise erfolgen.

Gemäß einem weiteren Ausführungsbeispiel ist das Messgerät derart konfiguriert, dass ein Betreiben des elektrothermischen Wandlers in einem Heiz-Modus (oder ein Ausschalten des elektrothermischen Wandlers) den Wärmefluss durch das Wärmetransportelement reduziert (bzw. den thermischen Widerstand des Wärmetransport-Pfades erhöht). Zusätzlich oder alternativ ist das Messgerät derart konfiguriert, dass ein Betreiben des elektrothermischen Wandlers in einem Kühl-Modus den Wärmefluss durch das Wärmetransportelement erhöht (bzw. den thermischen Widerstand des Wärmetransport-Pfades reduziert).

Durch den erhöhten thermischen Widerstand wird weniger produzierte Wärme von der Heizvorrichtung abtransportiert. Gleichzeitig wirkt der erhöhte thermische Widerstand als Abschirmung gegen die Kühlvorrichtung. Durch den reduzierten thermischen Widerstand kann die Wärme der aufgeheizten Probenaufnahme schnell abtransportiert werden. Zugleich wird nun die kühlende Wirkung der Kühlvorrichtung nicht mehr abgeschirmt.

Durch diese vorteilhafte Ausgestaltung kann folgendes Betriebsverfahren ermöglicht sein:
(i) Bereitstellen einer Probe in einer Probenaufnahme des Messgeräts,)
ii) Erhöhen des thermischen Widerstands des Wärmetransport-Pfades, wenn die Temperatur der Probenaufnahme erhöht wird, und/oder iii) Reduzieren des thermischen Widerstands des Wärmetransport-Pfades, wenn die Temperatur der Probenaufnahme reduziert wird.

Gemäß einem weiteren Ausführungsbeispiel ist das Messgerät derart konfiguriert, dass das Betreiben des elektrothermischen Wandlers in einem Kühl-Modus das Vorsehen einer geringeren Temperatur (insbesondere minus 20°C oder weniger, weiter insbesondere minus 30°C oder weniger, weiter insbesondere minus 40°C oder weniger) in dem Messgerät erlaubt, als ohne das Betreiben des elektrothermischen Wandlers in dem Kühl-Modus. Dies kann den Vorteil haben, dass zusätzlich zu dem dynamischen Einstellen des thermischen Widerstandes eine besonders effiziente Kühlung und niedrigere Minimaltemperatur der Probenkammer ermöglicht ist.

Der elektrothermische Wandler kann bei Benutzung der Kühlvorrichtung verwendet werden, um die niedrigste mögliche Temperatur zu senken. Auf diese Weise können bei normaler Kühlung (z.B. Luftkühlung) signifikant tiefe Temperaturen der Messkammer (bis zu -40°C) erreicht werden. Der Einsatz des beschriebenen Messgeräts erhöht die mögliche Geschwindigkeit der Temperaturänderungen und ermöglicht eine niedrigere Minimaltemperatur als die Kühlvorrichtung für sich allein genommen.

Gemäß einem weiteren Ausführungsbeispiel weist das Wärmetransportelement ein Metall (z.B. Nickel oder eine Nickellegierung, Kupfer oder eine Kupferlegierung, Aluminium oder eine Aluminiumlegierung, eine Funktionskeramik) auf. Dies kann den Vorteil haben, dass ein effektiver und robuster Wärmefluss mittels etablierter und erprobter Materialien erfolgt.
Figur 1 zeigt ein Messgerät gemäß einem exemplarischen Ausführungsbeispiel der Erfindung.
Figur 2 zeigt ein Messgerät gemäß einem weiteren exemplarischen Ausführungsbeispiel der Erfindung.
Figur 3 zeigt eine Implementierung des Messgeräts gemäß einem weiteren exemplarischen Ausführungsbeispiel der Erfindung.

Bevor die Figuren detailliert beschrieben werden, sind im Folgenden einige konkrete Ausführungsbeispiele der Erfindung erläutert.

Gemäß einem exemplarischen Ausführungsbeispiel wäre es für eine dynamische Temperaturregelung vorteilhaft, wenn der Wärmewiderstand zwischen Probenkammer (Probenaufnahme) und Kühlsystem (Kühlvorrichtung) beim Erwärmen (oder wenn hohe Temperaturen gehalten werden sollen), hoch wäre, bzw. wenn der Wärmewiderstand zwischen Probenkammer und Kühlsystem beim Abkühlen (oder wenn niedrige Temperaturen erreicht werden sollen), gering wäre. Diese Problematik wird dadurch gelöst, dass Peltier-Elemente als variable thermische Widerstände wirken, was für Dynamik und thermische Auslegung des gesamten Messgeräts von Vorteil ist. Die Peltierelemente stellen hierbei keine Zusatzheizung oder -kühlung für den Ofen (Heizvorrichtung) dar.

Gemäß einem weiteren exemplarischen Ausführungsbeispiel wird ein Peltier-Element in der Aufheizphase des Messgerätes in den Heizbetrieb gebracht (oder alternativ abgeschaltet) und der thermische Widerstand wird hoch. In der Abkühlphase wird das Peltier-Element in den Kühlbetrieb gebracht und es stellt sich ein niedriger thermischer Widerstand ein (Verwendung von Peltier-Elementen als variabler thermischer Widerstand zwischen Heizvorrichtung und Kühlvorrichtung). Wenn das Peltier-Element nicht bestromt wird oder sich das Peltier-Element erwärmt, ist der Wärmewiderstand zwischen der Heizvorrichtung und der Kühlvorrichtung hoch.

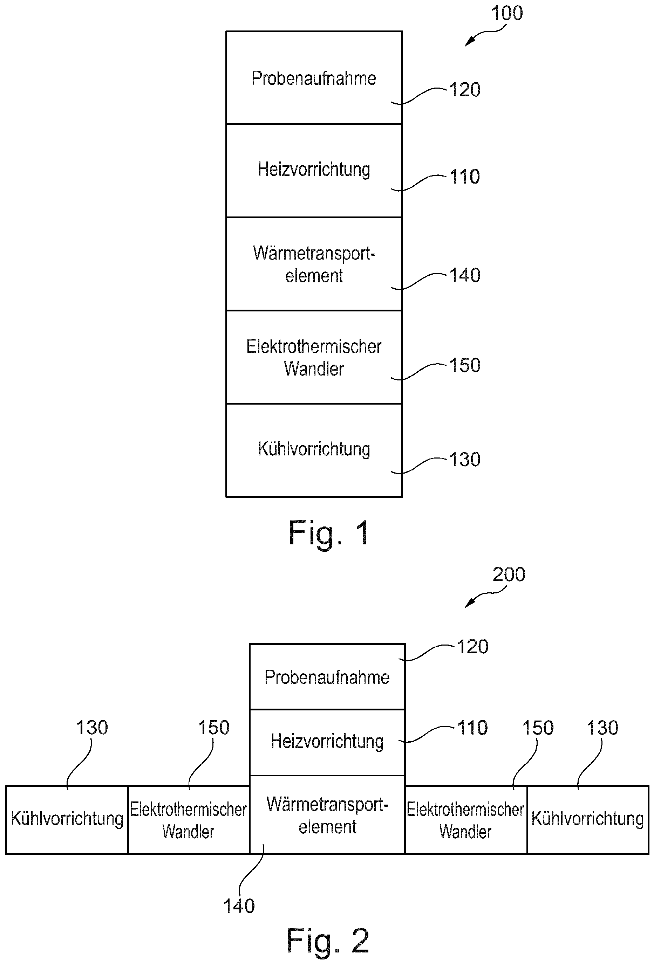

**Figur 1** zeigt schematisch den Aufbau eines Messgeräts 100 gemäß einem exemplarischen Ausführungsbeispiel der Erfindung. Das Messgerät 100 weist eine Probenaufnahme 120 (zwei Probenbehälter für eine Differenz-Messung) zum Aufnehmen der Probe(n) auf. Unterhalb der Probenaufnahme 120 ist eine Heizvorrichtung zum Erhöhen der Temperatur der Probenaufnahme 120 angeordnet. Bevorzugt ist die Heizvorrichtung 110 eingerichtet zum Bereitstellen eines zeitabhängigen ansteigenden Temperaturverlaufs (also eines Temperaturprofils) bezüglich der Probe. Unterhalb der Heizvorrichtung 110 ist ein Wärmetransportelement 140 positioniert, welches einen thermischen Widerstand (bzw. eine spezifische Wärmeleitfähigkeit) aufweist. Das Wärmetransportelement weist in einem Ausführungsbeispiel eine Nickellegierung auf. Das Messgerät 100 weist ferner eine Kühlvorrichtung 130 zum Reduzieren der Temperatur der Probenaufnahme 120 (bzw. zum Reduzieren der Temperatur in dem Messgerät 100) auf. Bevorzugt ist die Kühlvorrichtung 130 eingerichtet zum Bereitstellen eines zeitabhängigen abfallenden Temperaturverlaufs (also eines Temperaturprofils) bezüglich der Probe. Die Heizvorrichtung 110 und die Kühlvorrichtung 130 sind räumlich voneinander getrennt. Dennoch ist ein Wärmefluss zwischen der Heizvorrichtung 110 und der Kühlvorrichtung 130 ermöglicht mittels des Wärmetransportelements 140. Das Wärmetransportelement 140 ist aber nicht direkt mit der Kühlvorrichtung 130 verbunden. Stattdessen wird ein elektrothermischen Wandler 150 (z.B. ein Peltier-Element) direkt zwischen dem Wärmetransportelement 140 und der Kühlvorrichtung 130 derart vorgesehen, dass ein direkter räumlicher (physikalischer) Kontakt (bzw. eine Berührung) zwischen Kühlvorrichtung 130 und Wärmetransportelement 140 verunmöglicht ist. Der elektrothermische Wandler 150 ist hierbei angeordnet, so dass ein Betreiben des elektrothermischen Wandlers 150 den Wärmefluss durch das Wärmetransportelement 140 (bzw. den thermischen Widerstand des Wärmetransport-Pfades durch das Wärmetransportelement 140 und den elektrothermischen Wandler 150) gezielt und dynamisch einstellen kann. Ein Betreiben des elektrothermischen Wandlers 150 in einem Heiz-Modus (oder Ausschalten des elektrothermischen Wandlers 150) bewirkt ein Reduzieren des Wärmeflusses (bzw. ein Erhöhen des thermischen Widerstandes des Wärmetransport-Pfades 140, 150). Entsprechend wird dieser Modus verwendet werden, wenn die Temperatur der Probenaufnahme 120 erhöht werden soll. Durch den erhöhten thermischen Widerstand wird weniger produzierte Wärme von der Heizvorrichtung abtransportiert. Gleichzeitig wirkt der erhöhte thermische Widerstand als Abschirmung gegen die Kühlvorrichtung. Ein Betreiben des elektrothermischen Wandlers 150 in einem Kühl-Modus bewirkt hingegen ein Erhöhen des Wärmeflusses durch das Wärmetransportelement 140 (bzw. ein Reduzieren des thermischen Widerstandes des Wärmetransport-Pfades 140, 150). Entsprechend wird dieser Modus verwendet werden, wenn die Temperatur der Probenaufnahme 120 reduziert werden soll. Durch den reduzierten thermischen Widerstand kann die Wärme der aufgeheizten Probenaufnahme schnell abtransportiert werden. Zugleich wird nun die kühlende Wirkung der Kühlvorrichtung nicht mehr abgeschirmt.
**Figur 2** zeigt schematisch den Aufbau eines Messgeräts 200 gemäß einem weiteren exemplarischen Ausführungsbeispiel der Erfindung. Im Unterschied zu Figur 1 sind zwei Kühlvorrichtungen 130 vorgesehen, welche jeweils seitlich des Wärmetransportelements 140 bzw. der Heizvorrichtung 110 angeordnet sind. Entsprechend werden zwei elektrothermische Wandler 150 verwendet, welche jeweils zwischen dem Wärmetransportelement 140 und einer der Kühlvorrichtungen 130 eingesetzt sind. Alternativ kann auch dargestellt sein, dass eine einzige Kühlvorrichtung 130 das Wärmetransportelement 140 bzw. die Heizvorrichtung 110 umrundet.
**Figur 3** zeigt eine Implementierung eines Messgeräts 300 wie in Figur 2 schematisch beschrieben gemäß einem exemplarischen Ausführungsbeispiel der Erfindung. Entlang einer Hauptachse A sind von oben nach unten angeordnet: die Probenaufnahme 120 (Messkammer), die Heizvorrichtung 110, ein erster Teil 141 des Wärmetransportelements 140, ein zweiter Teil 142 des Wärmetransportelements 140, und ein isolierender Sockel 180. Der erste Teil 141 des Wärmetransportelements 140 ist Rohr (Fass) -förmig ausgestaltet und verbindet die Heizvorrichtung 110 mit dem zweiten Teil 142 des Wärmetransportelements 140, welcher als Flansch bzw. Scheiben-förmig ausgebildet ist. Die gezeigte Ausführung des Wärmetransportelements 140 hat sich als energietechnisch vorteilhaft herausgestellt, jedoch sind eine Vielzahl von weiteren (vorteilhaften) Ausgestaltungsmöglichkeiten des Wärmetransportelements 140 möglich. Um den ersten und zweiten Teil 141, 142 des Wärmetransportelements 140 herum ist ein Wärmekoppelelement 145 befestigt, welches im Prinzip auch ein Wärmetransportelement 140 (z.B. aus Kupfer) ist. Das Wärmekoppelelement 145 ist optional und dient in dem gezeigten Beispiel einer effizienten Befestigung (der Kühlvorrichtung 130). Entlang des Wärmetransportelements 140 (insbesondere an der Außenseite des Wärmekoppelelement 145) sind Peltier-Elemente 150 befestigt, welche als elektrothermische Wandler eingesetzt werden, um den thermischen Widerstand des Wärmetransportelements 140 gezielt einzustellen. Die Kühlvorrichtung 130 weist zwei Wärmesenken auf, welche seitlich des Wärmetransportelements 140 (bzw. senkrecht zu der Hauptachse A) angebracht sind. Wie oben bereits erläutert, sind die Peltier-Elemente 150 direkt zwischen Wärmetransportelement 140 und Kühlvorrichtung 130 befestigt (eingeklemmt) und verhindern somit jeglichen physikalischen (räumlichen) Kontakt zwischen Wärmetransportelement 140 und Kühlvorrichtungen 130.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichen

- 100, 200, 300: Messgerät
- 110: Heizvorrichtung
- 120: Probenaufnahme
- 130: Kühlvorrichtung
- 140: Wärmetransportelement
- 141: Wärmetransportelement erster Teil
- 142: Wärmetransportelement zweiter Teil
- 145: Wärmekoppelelement
- 150: Elektrothermischer Wandler, Peltier-Element
- 180: Sockel

## Patentansprüche

1. Ein Messgerät (100) zur thermischen Analyse einer Probe, wobei das Messgerät (100) aufweist:
eine Probenaufnahme (120) zum Aufnehmen der Probe,
wobei die Probenaufnahme (120) zwei Probenbehälter aufweist, und
wobei das Messgerät (100) konfiguriert ist, eine Differenz-Messung bezüglich der zwei Probenbehälter durchzuführen;
eine Heizvorrichtung (110) zum Erhöhen der Temperatur der Probenaufnahme (120),
wobei die Heizvorrichtung (110) unterhalb der Probenaufnahme (120) angeordnet ist oder wobei die Heizvorrichtung (110) kreisförmig um die Probenaufnahme (120) herum lokalisiert ist;
eine Kühlvorrichtung (130) zum Reduzieren der Temperatur der Probenaufnahme (120);
wobei die Heizvorrichtung (110) räumlich näher an der Probenaufnahme (120) angeordnet ist als die Kühlvorrichtung (130);
**gekennzeichnet durch** ein Wärmetransportelement (140), welches ein Bauteil ist, welches eine spezifische Wärmeleitfähigkeit aufweist, und welches zwischen der Heizvorrichtung (110) und der Kühlvorrichtung (130) derart angeordnet ist, dass ein Wärmefluss zwischen der Heizvorrichtung (110) und der Kühlvorrichtung (130) über das Wärmetransportelement (140) ermöglicht ist,
wobei das Wärmetransportelement (140) unterhalb der Heizvorrichtung (110) angeordnet ist;
einen elektrothermischen Wandler (150), welcher zwischen dem Wärmetransportelement (140) und der Kühlvorrichtung (130) derart angeordnet ist, dass ein Betreiben des elektrothermischen Wandlers (150) den Wärmefluss durch das Wärmetransportelement (140) einstellt,
wobei der elektrothermische Wandler (150) in einem Heiz-Modus und in einem Kühl-Modus betrieben werden kann;
wobei der elektrothermische Wandler (150) derart zwischen dem Wärmetransportelement (140) und der Kühlvorrichtung (130) angeordnet ist, dass ein direkter Kontakt zwischen dem Wärmetransportelement (140) und der Kühlvorrichtung (130) verunmöglicht ist; und
eine Steuereinheit zum Ansteuern des elektrothermischen Wandlers (150), wobei die Steuereinheit eingerichtet ist automatisch ein gezieltes Steuern oder Regeln des elektrothermischen Wandlers (150) durchzuführen, um dadurch den thermischen Widerstand des Wärmetransport-Pfades durch das Wärmetransportelement (140) und den elektrothermischen Wandler (150) auf einen gewünschten Wertebereich und/oder erforderliche Bedingungen einzustellen.

2. Das Messgerät (100) gemäß Anspruch 1,
wobei der elektrothermische Wandler (150) ein Peltier-Element aufweist.

3. Das Messgerät (100) gemäß einem beliebigen der vorhergehenden Ansprüche,
wobei das Messgerät (100) ein Differenz-Abtast Kalorimeter oder ein Differenz-Thermoanalyse Messgerät ist.

4. Das Messgerät (100) gemäß einem beliebigen der vorhergehenden Ansprüche,
wobei die Heizvorrichtung (110) eingerichtet ist zum Bereitstellen eines zeitabhängigen ansteigenden Temperaturverlaufs; und/oder wobei die Kühlvorrichtung (130) eingerichtet ist zum Bereitstellen eines zeitabhängigen abfallenden Temperaturverlaufs.

5. Das Messgerät (100) gemäß einem beliebigen der vorhergehenden Ansprüche,
wobei die Kühlvorrichtung (130) zumindest eines aus der Gruppe aufweist, welche besteht aus: einem Wärmerohr, einer Wärmesenke, einem Kryostaten, einem Peltier-Element, einem Wärmetauscher.

6. Das Messgerät (100) gemäß einem beliebigen der vorhergehenden Ansprüche,
wobei das Messgerät (100) derart konfiguriert ist, dass
ein Betreiben des elektrothermischen Wandlers (150) in einem Heiz-Modus oder ein Ausschalten des elektrothermischen Wandlers (150) den thermischen Widerstand eines Wärmetransport-Pfades durch das Wärmetransportelement (140) und den elektrothermischen Wandler (150) erhöht, und den Wärmefluss durch das Wärmetransportelement (140) reduziert;
und/oder
ein Betreiben des elektrothermischen Wandlers (150) in einem Kühl-Modus den thermischen Widerstand des Wärmetransport-Pfades durch das Wärmetransportelement (140) und den elektrothermischen Wandler (150) reduziert, und den Wärmefluss durch das Wärmetransportelement (140) erhöht.

7. Das Messgerät (100) gemäß einem beliebigen der vorhergehenden Ansprüche,
wobei das Messgerät (100) derart konfiguriert ist, dass das Betreiben des elektrothermischen Wandlers (150) in einem Kühl-Modus das Vorsehen einer geringeren Temperatur, insbesondere minus 40°C oder weniger, in dem Messgerät (100) erlaubt, als ohne das Betreiben des elektrothermischen Wandlers (150) in dem Kühl-Modus.

8. Das Messgerät (100) gemäß einem beliebigen der vorhergehenden Ansprüche,
wobei das Wärmetransportelement (140) ein Metall, insbesondere Nickel oder eine Nickellegierung, oder eine Funktionskeramik aufweist.

9. Ein Verfahren zum Betreiben eines Messgeräts (100) zur thermischen Analyse, welches aufweist
eine Probenaufnahme (120), wobei die Probenaufnahme (120) zwei Probenbehälter aufweist, und wobei das Messgerät (100) konfiguriert ist, eine Differenz-Messung bezüglich der zwei Probenbehälter durchzuführen,
eine Heizvorrichtung (110), wobei die Heizvorrichtung (110) unterhalb der Probenaufnahme (120) angeordnet ist oder wobei die Heizvorrichtung (110) kreisförmig um die Probenaufnahme (120) herum lokalisiert ist, und
eine Kühlvorrichtung (130), wobei die Heizvorrichtung (110) räumlich näher an der Probenaufnahme (120) angeordnet ist als die Kühlvorrichtung (130), wobei die Heizvorrichtung (110) und die Kühlvorrichtung mittels eines Wärmetransportelements (140), welches ein Bauteil ist, über einen Wärmefluss miteinander gekoppelt sind, wobei das Wärmetransportelement (140) unterhalb der Heizvorrichtung (110) angeordnet ist, und
einen elektrothermische Wandler (150), welcher derart zwischen dem Wärmetransportelement (140) und der Kühlvorrichtung (130) angeordnet ist, dass ein direkter Kontakt zwischen dem Wärmetransportelement (140) und der Kühlvorrichtung (130) verunmöglicht ist, wobei der elektrothermische Wandler (150) in einem Heiz-Modus und in einem Kühl-Modus betrieben werden kann, das Verfahren aufweisend:
Bereitstellen eines elektrothermischen Wandlers (150) zwischen dem Wärmetransportelement (140) und der Kühlvorrichtung (130);
gezieltes Steuern oder Regeln des elektrothermischen Wandlers (150) mittels einer Steuereinheit, automatisch oder manuell von einem Benutzer, um dadurch einen thermischen Widerstand eines Wärmetransport-Pfades durch das Wärmetransportelement (140) und den elektrothermischen Wandler (150) auf einen gewünschten Wertebereich und/oder erforderliche Bedingungen einzustellen, wobei das Steuern oder Regeln ferner aufweist:
Betreiben des elektrothermischen Wandlers (150) in einem Heiz-Modus oder Ausschalten des elektrothermischen Wandlers (150), um den Wärmefluss durch das Wärmetransportelement (140) zu reduzieren; und
Betreiben des elektrothermischen Wandlers (150) in einem KühlModus, um den Wärmefluss durch das Wärmetransportelement (140) zu erhöhen.

10. Das Verfahren gemäß Anspruch 9, wobei das Verfahren ferner aufweist:
Bereitstellen einer Probe in einer Probenaufnahme (120) des Messgeräts (100);
Erhöhen des thermischen Widerstands des Wärmetransport-Pfades durch das Wärmetransportelement (140) und den elektrothermischen Wandler (150), wenn die Temperatur der Probenaufnahme (120) erhöht wird; und/oder
Reduzieren des thermischen Widerstands des Wärmetransport-Pfades durch das Wärmetransportelement (140) und den elektrothermischen Wandler (150), wenn die Temperatur der Probenaufnahme (120) reduziert wird.

## Claims

1. A measuring device (100) for a thermal analysis of a sample, wherein the measuring device (100) comprises:
a sample reception (120) for receiving the sample,
wherein the sample reception (120) comprises two sample containers, and
wherein the measuring device (100) is configured to perform a differential measurement with respect to the two sample containers;
a heating device (110) for increasing the temperature of the sample reception (120),
wherein the heating device (110) is arranged below the sample reception (120) or wherein the heating device (110) is located in a circular manner around the sample reception (120);
a cooling device (130) for reducing the temperature of the sample reception (120);
wherein the heating device (110) is arranged spatially closer to the sample reception (120) than the cooling device (130);
**characterized by**
a heat transporting element (140) which is a component which comprises a specific heat conductivity, and which is arranged between the heating device (110) and the cooling device (130), such that a heat flow between the heating device (110) and the cooling device (130) via the heat transporting element (140) is enabled,
wherein the heat transporting element (140) is arranged below the heating device (110);
an electrothermal converter (150) which is arranged between the heat transporting element (140) and the cooling device (130), such that operating the electrothermal converter (150) adjusts the heat flow through the heat transporting element (140),
wherein the electrothermal converter (150) can be operated in a heating mode and in a cooling mode;
wherein the electrothermal converter (150) is arranged between the heat transporting element (140) and the cooling device (130), such that a direct contact between the heat transporting element (140) and the cooling device (130) is made impossible; and
a control unit for controlling the electrothermal converter (150),
wherein the control unit is adapted to automatically perform specifically controlling or regulating the electrothermal converter (150), to thereby adjust the thermal resistance of the heat transport path through the heat transporting element (140) and the electrothermal converter (150) to a desired value range and/or required conditions.

2. The measuring device (100) according to claim 1,
wherein the electrothermal converter (150) comprises a Peltier element.

3. The measuring device (100) according to any of the previous claims,
wherein the measuring device (100) is a differential sensing calorimeter or a differential thermal analysis measuring device.

4. The measuring device (100) according to any of the previous claims,
wherein the heating device (110) is adapted for providing a time-depending increasing temperature course; and/or
wherein the cooling device (130) is adapted for providing a time-depending decreasing temperature course.

5. The measuring device (100) according to any of the previous claims,
wherein the cooling device (130) comprises at least one of the group which is consisting of: a heat tube, a heat sink, a cryostat, a Peltier element, a heat exchanger.

6. The measuring device (100) according to any of the previous claims,
wherein the measuring device (100) is configured such that
operating the electrothermal converter (150) in a heating mode or switching off the electrothermal converter (150) increases the thermal resistance of a heat transport path through the heat transporting element (140) and the electrothermal converter (150), and reduces the heat flow through the heat transporting element (140);
and/or
operating the electrothermal converter (150) in a cooling mode reduces the thermal resistance of the heat transport path through the heat transporting element (140) and the electrothermal converter (150), and increases the heat flow through the heat transporting element (140).

7. The measuring device (100) according to any of the previous claims,
wherein the measuring device (100) is configured such that operating the electrothermal converter (150) in a cooling mode enables providing a lower temperature, in particular minus 40°C or less, in the measuring device (100) than without operating the electrothermal converter (150) in the cooling mode.

8. The measuring device (100) according to any of the previous claims,
wherein the heat transporting element (140) comprises a metal, in particular nickel or a nickel alloy, or a functional ceramic.

9. A method for operating a measuring device (100) for a thermal analysis, which comprises
a sample reception (120), wherein the sample reception (120) comprises two sample containers, and wherein the measuring device (100) is configured to perform a differential measurement with respect to the two sample containers, a heating device (110), wherein the heating device (110) is arranged below the sample reception (120) or wherein the heating device (110) is located in a circular manner around the sample reception (120), and
a cooling device (130), wherein the heating device (110) is arranged spatially closer to the sample reception (120) than the cooling device (130),
wherein the heating device (110) and the cooling device are coupled with each other via a heat flow by a heat transporting element (140), which is a component, wherein the heat transporting element (140) is arranged below the heating device (110), and
an electrothermal converter (150) which is arranged between the heat transporting element (140) and the cooling device (130), such that a direct contact between the heat transporting element (140) and the cooling device (130) is made impossible, wherein the electrothermal converter (150) can be operated in a heating mode and in a cooling mode, the method comprising:
providing an electrothermal converter (150) between the heat transporting element (140) and the cooling device (130);
specifically controlling or regulating the electrothermal converter (150) by a control unit, automatically or manually by a user, to thereby adjust a thermal resistance of a heat transport path through the heat transporting element (140) and the electrothermal converter (150) to a desired value range and/or required conditions, wherein controlling or regulating further comprises:
operating the electrothermal converter (150) in a heating mode or switching off the electrothermal converter (150), to reduce the heat flow through the heat transporting element (140); and
operating the electrothermal converter (150) in a cooling mode, to increase the heat flow through the heat transporting element (140).

10. The method according to claim 9, wherein the method further comprises:
providing a sample in a sample reception (120) of the measuring device (100);
increasing the thermal resistance of the heat transport path through the heat transporting element (140) and the electrothermal converter (150), when the temperature of the sample reception (120) is increased; and/or
reducing the thermal resistance of the heat transport path through the heat transporting element (140) and the electrothermal converter (150), when the temperature of the sample reception (120) is reduced.

## Revendications

1. Appareil de mesure (100) destiné à l'analyse thermique d'un échantillon, dans lequel l'appareil de mesure (100) comprend :
un logement d'échantillon (120) permettant d'accueillir l'échantillon, dans lequel le logement d'échantillon (120) présente deux récipients à échantillon, et l'appareil de mesure (100) est configuré pour mettre en œuvre une mesure différentielle par rapport aux deux récipients à échantillon ;
un dispositif de chauffage (110) permettant d'augmenter la température du logement d'échantillon (120),
dans lequel le dispositif de chauffage (110) est agencé sous le logement d'échantillon (120) ou dans lequel le dispositif de chauffage (110) est positionné de manière circulaire autour du logement d'échantillon (120) ;
un dispositif de refroidissement (130) permettant de réduire la température du logement d'échantillon (120) ;
dans lequel le dispositif de chauffage (110) est agencé spatialement plus près du logement d'échantillon (120) que ne l'est le dispositif de refroidissement (130) ;
**caractérisé par**
un élément de transport de chaleur (140) qui est un composant présentant une conductivité thermique spécifique et qui est agencé entre le dispositif de chauffage (110) et le dispositif de refroidissement (130) de manière à permettre un flux de chaleur entre le dispositif de chauffage (110) et le dispositif de refroidissement (130) par l'intermédiaire de l'élément de transport de chaleur (140),
dans lequel l'élément de transport de chaleur (140) est agencé sous le dispositif de chauffage (110) ;
un convertisseur électrothermique (150), qui est agencé entre l'élément de transport de chaleur (140) et le dispositif de refroidissement (130) de telle manière que le fonctionnement du convertisseur électrothermique (150) ajuste le flux de chaleur traversant l'élément de transport de chaleur (140),
dans lequel le convertisseur électrothermique (150) peut fonctionner en mode de chauffage et en mode de refroidissement ;
dans lequel le convertisseur électrothermique (150) est agencé entre l'élément de transport de chaleur (140) et le dispositif de refroidissement (130) de manière à rendre impossible un contact direct entre l'élément de transport de chaleur (140) et le dispositif de refroidissement (130) ; et
une unité de commande permettant de commander le convertisseur électrothermique (150), dans lequel l'unité de commande est conçue pour mettre en œuvre de manière automatique une commande ou une régulation ciblée du convertisseur électrothermique (150) afin d'ajuster ainsi la résistance thermique du chemin de transport de chaleur traversant l'élément de transport de chaleur (140) et le convertisseur électrothermique (150) pour la faire correspondre à une plage de valeurs souhaitée et/ou à des conditions requises.

2. Appareil de mesure (100) selon la revendication 1, dans lequel le convertisseur électrothermique (150) comprend un module à effet Peltier.

3. Appareil de mesure (100) selon l'une quelconque des revendications précédentes, dans lequel l'appareil de mesure (100) est un calorimètre différentiel à balayage ou un appareil de mesure à analyse thermique différentielle.

4. Appareil de mesure (100) selon l'une quelconque des revendications précédentes, dans lequel le dispositif de chauffage (110) est conçu pour fournir une courbe de température croissante en fonction du temps ; et/ou
dans lequel le dispositif de refroidissement (130) est conçu pour fournir une courbe de température décroissante en fonction du temps.

5. Appareil de mesure (100) selon l'une quelconque des revendications précédentes, dans lequel le dispositif de refroidissement (130) comprend au moins un élément choisi dans le groupe constitué de : un caloduc, un dissipateur de chaleur, un cryostat, un module à effet Peltier, un échangeur de chaleur.

6. Appareil de mesure (100) selon l'une quelconque des revendications précédentes, dans lequel l'appareil de mesure (100) est configuré de telle manière que
le fonctionnement du convertisseur électrothermique (150) en mode de chauffage ou l'arrêt du convertisseur électrothermique (150) augmente la résistance thermique d'un chemin de transport de chaleur traversant l'élément de transport de chaleur (140) et le convertisseur électrothermique (150), et réduit le flux de chaleur traversant l'élément de transport de chaleur (140) ;
et/ou
le fonctionnement du convertisseur électrothermique (150) en mode de refroidissement réduit la résistance thermique du chemin de transport de chaleur traversant l'élément de transport de chaleur (140) et le convertisseur électrothermique (150), et augmente le flux de chaleur traversant l'élément de transport de chaleur (140).

7. Appareil de mesure (100) selon l'une quelconque des revendications précédentes, dans lequel l'appareil de mesure (100) est configuré de telle manière que le fonctionnement du convertisseur électrothermique (150) en mode de refroidissement permet de prévoir au sein de l'appareil de mesure (100) une température plus basse, en particulier inférieure ou égale à 40°C, qu'elle ne le serait sans le fonctionnement du convertisseur électrothermique (150) en mode de refroidissement.

8. Appareil de mesure (100) selon l'une quelconque des revendications précédentes, dans lequel l'élément de transport de chaleur (140) comprend un métal, en particulier du nickel ou un alliage de nickel, ou une céramique fonctionnelle.

9. Procédé permettant de faire fonctionner un appareil de mesure (100) en vue d'une analyse thermique, présentant
un logement d'échantillon (120), dans lequel le logement d'échantillon (120) présente deux récipients à échantillon, et dans lequel l'appareil de mesure (100) est configuré pour mettre en œuvre une mesure différentielle par rapport aux deux récipients à échantillon,
un dispositif de chauffage (110), dans lequel le dispositif de chauffage (110) est agencé sous le logement d'échantillon (120) ou dans lequel le dispositif de chauffage (110) est positionné de manière circulaire autour du logement d'échantillon (120), et
un dispositif de refroidissement (130), dans lequel le dispositif de chauffage (110) est agencé spatialement plus près du logement d'échantillon (120) que ne l'est le dispositif de refroidissement (130), dans lequel le dispositif de chauffage (110) et le dispositif de refroidissement sont couplés l'un à l'autre par un flux de chaleur au moyen d'un élément de transport de chaleur (140) qui est un composant, l'élément de transport de chaleur (140) étant agencé sous le dispositif de chauffage (110), et
un convertisseur électrothermique (150) agencé entre l'élément de transport de chaleur (140) et le dispositif de refroidissement (130) de manière à rendre impossible un contact direct entre l'élément de transport de chaleur (140) et le dispositif de refroidissement (130), dans lequel le convertisseur électrothermique (150) peut fonctionner en mode de chauffage et en mode de refroidissement,
ledit procédé comprenant les étapes consistant à :
fournir un convertisseur électrothermique (150) entre l'élément de transport de chaleur (140) et le dispositif de refroidissement (130) ;
commander ou réguler de manière ciblée le convertisseur électrothermique (150) au moyen d'une unité de commande, de manière automatique ou manuellement par un utilisateur, afin d'ajuster ainsi une résistance thermique d'un chemin de transport de chaleur traversant l'élément de transport de chaleur (140) et le convertisseur électrothermique (150) pour la faire correspondre à une plage de valeurs souhaitée et/ou à des conditions requises, dans lequel l'étape de commande ou de régulation comprend en outre les étapes consistant à :
faire fonctionner le convertisseur électrothermique (150) en mode de chauffage ou arrêter le convertisseur électrothermique (150) afin de réduire le flux de chaleur traversant l'élément de transport de chaleur (140) ; et
faire fonctionner le convertisseur électrothermique (150) en mode de refroidissement afin d'augmenter le flux de chaleur traversant l'élément de transport de chaleur (140).

10. Procédé selon la revendication 9, dans lequel le procédé comprend en outre les étapes consistant à :
fournir un échantillon dans un logement d'échantillon (120) de l'appareil de mesure (100) ;
augmenter la résistance thermique du chemin de transport de chaleur traversant l'élément de transport de chaleur (140) et le convertisseur électrothermique (150) lorsque la température du logement d'échantillon (120) est augmentée ; et/ou
réduire la résistance thermique du chemin de transport de chaleur traversant l'élément de transport de chaleur (140) et le convertisseur électrothermique (150) lorsque la température du logement d'échantillon (120) est réduite.
